# EUROPEAN PATENT SPECIFICATION

(11) **EP 3 223 493 B1**
(45) Date of publication and mention of the grant of the patent: **22.05.2019**
(21) Application number: 15862045.0
(22) Date of filing: 05.02.2015
(51) Int. Cl.: H04L 29/12, H04L 29/08, H04L 12/28

(54) **POINT-TO-POINT PROTOCOL (PPP)-BASED DIAL-ON-DEMAND METHOD AND DEVICE, AND COMPUTER STORAGE MEDIUM**
AUF PUNKT-ZU-PUNKT PROTOKOLL (PPP) BASIERTES DIAL-ON-DEMAND-VERFAHREN UND VORRICHTUNG SOWIE COMPUTERSPEICHERMEDIUM
DISPOSITIF ET PROCÉDÉ DE CONNEXION À LA DEMANDE SUR LA BASE DE PROTOCOLE POINT À POINT (PPP), ET SUPPORT DE STOCKAGE INFORMATIQUE

(30) Priority: 17.11.2014 CN 201410654553
(43) Date of publication of application: 27.09.2017
(73) Proprietor: ZTE Corporation, Shenzhen, Guangdong 518057 (CN)
(72) Inventor: FAN, Na, Shenzhen Guangdong 518057 (CN); ZHAO, Endong, Shenzhen Guangdong 518057 (CN)
(74) Representative: Potter Clarkson
(86) International application number: PCT/CN2015/072339
(87) International publication number: WO 2016/078228

(56) References cited:
- WO-A1-2013/123763
- CN-A- 1 744 596
- CN-A- 1 744 596
- CN-A- 102 340 546
- CN-A- 103 457 823
- US-A1- 2009 210 542
- US-A1- 2012 102 213

## Description

### TECHNICAL FIELD

The present disclosure relates to Point-to-Point Protocol (PPP)-based dialing technologies in network communications, and more particularly, to a PPP-based dial-on-demand method and device and a computer storage medium.

### BACKGROUND

In network communications, PPP dialing is a common network access approach in which networks can be accessed via a home gateway. Specifically, the home gateway triggers network connection dialing by detecting data packets from a PPP network interface of the home gateway, or maintains the successful state of the PPP network connection dialing.

In related arts, some users access networks using the PPP-based dial-on-demand approach in order to save costs. That is to say, the home gateway triggers connection and dialing only if data packets, sources of which are designated by the users, pass through the PPP network interface of the home gateway.

At present, no schemes for PPP-based dial-on-demand exist under the Internet Protocol Version 6 (IPv6) protocol.

### SUMMARY

In view of the above, embodiments of the present disclosure provide a PPP-based dial-on-demand method and device and a computer storage medium, which are capable of realizing PPP-based dial-on-demand under the IPv6 protocol.

The technical solutions of embodiments of the present disclosure are as follows.

According to a first aspect of embodiments of the present disclosure, there is provided a PPP-based dial-on-demand method, including:
sending, by a home gateway, a virtual prefix to a terminal, wherein the virtual prefix is used for the terminal to configure an IPv6 virtual address of the terminal itself; and
after confirming that a received data packet allows to trigger PPP network connection dialing, performing the PPP network connection dialing by the home gateway, wherein the data packet is sent by the terminal using the IPv6 virtual address.

According to an exemplary embodiment, before sending of the virtual prefix to the terminal by the home gateway, the method further includes:
configuring, by the home gateway, an IPv6 virtual address of the home gateway itself, wherein the IPv6 virtual address of the home gateway is used for local link communication of the home gateway.

According to an exemplary embodiment, performing the PPP network connection dialing by the home gateway includes:
sending, by the home gateway, an address acquisition request to an access server;
receiving, by the home gateway, an address prefix sent by the access server in response to the address acquisition request;
setting, by the home gateway, the virtual prefix as an invalid prefix, and sending the terminal an invalid virtual prefix notification which is configured to notify the terminal that the virtual prefix has been set as an invalid prefix; and
sending, by the home gateway, the address prefix to the terminal, wherein the address prefix is used for the terminal to configure an IPv6 actual address of the terminal itself.

According to an exemplary embodiment, after sending of the address acquisition request to the access server by the home gateway, the method further includes:
receiving, by the home gateway, address configuration information sent by the access server in response to the address acquisition request; and
configuring, by the home gateway, an IPv6 actual address of the home gateway itself according to the address prefix and/or the address configuration information, wherein the IPv6 actual address of the home gateway is used for local link communication of the home gateway.

According to an exemplary embodiment, after sending of the address prefix to the terminal by the home gateway, the method further includes:
if no data packet is detected within a preset time period, resending, by the home gateway, the virtual prefix or the address prefix to the terminal.

According to a second aspect of embodiments of the present disclosure, there is provided a PPP-based dial-on-demand method, including:
receiving, by a terminal, a virtual prefix sent by a home gateway;
configuring, by the terminal, an IPv6 virtual address of the terminal itself according to the virtual prefix; and
sending, by the terminal, a data packet to the home gateway using the IPv6 virtual address, wherein the data packet is configured to trigger the home gateway to perform PPP network connection dialing.

According to an exemplary embodiment, after sending of the data packet to the home gateway by the terminal using the IPv6 virtual address, the method further includes:
confirming, by the terminal, that the virtual prefix has been set as an invalid prefix according to an invalid virtual prefix notification which is received from the home gateway;
receiving, by the terminal, an address prefix sent from the home gateway, wherein the address prefix is sent from an access server to the home gateway; and
configuring, by the terminal, an IPv6 actual address of the terminal itself according to the address prefix, wherein the IPv6 actual address of the terminal is used for the terminal to access a network.

According to a third aspect of embodiments of the present disclosure, there is provided a home gateway, including:
a first sending unit configured to send a virtual prefix to a terminal, wherein the virtual prefix is used for the terminal to configure an IPv6 virtual address of the terminal itself; and
a dialing unit configured to, after it is confirmed that a received data packet allows to trigger PPP network connection dialing, perform the PPP network connection dialing, wherein the data packet is sent by the terminal using the IPv6 virtual address.

According to an exemplary embodiment, the home gateway further includes:
a first address configuration unit configured to configure an IPv6 virtual address of the home gateway before the first sending unit sends the virtual prefix to the terminal, wherein the IPv6 virtual address of the home gateway is used for local link communication of the home gateway.

According to an exemplary embodiment, the dialing unit is configured to:
send an address acquisition request to an access server;
receive an address prefix sent by the access server in response to the address acquisition request;
set the virtual prefix as an invalid prefix, and send the terminal an invalid virtual prefix notification which is configured to notify the terminal that the virtual prefix has been set as an invalid prefix; and
send the address prefix to the terminal, wherein the address prefix is used for the terminal to configure an IPv6 actual address of the terminal itself.

According to an exemplary embodiment, the dialing unit is further configured to, after the address acquisition request is sent to the access server, receive address configuration information sent by the access server in response to the address acquisition request;
the home gateway further includes:
a first address configuration unit configured to configure an IPv6 actual address of the home gateway according to the address prefix and/or the address configuration information after the dialing unit receives the address configuration information sent from the access server in response to the address acquisition request, wherein the IPv6 actual address of the home gateway is used for local link communication of the home gateway.

According to an exemplary embodiment, the first sending unit is further configured to, after the dialing unit performs the PPP network connection dialing, resend the virtual prefix or the address prefix to the terminal if no data packet is detected within a preset time period.

According to a fourth aspect of embodiments of the present disclosure, there is provided a terminal, including:
a receiving unit configured to receive a virtual prefix sent by a home gateway;
a second address configuration unit configured to configure an IPv6 virtual address of the terminal itself according to the virtual prefix; and
a second sending unit configured to send a data packet to the home gateway using the IPv6 virtual address, wherein the data packet is configured to trigger the home gateway to perform PPP network connection dialing.

According to an exemplary embodiment, the receiving unit is further configured to:
after the second sending unit sends the data packet to the home gateway using the IPv6 virtual address, confirm that the virtual prefix has been set as an invalid prefix according to an invalid virtual prefix notification which is received from the home gateway, and receive an address prefix sent from the home gateway, wherein the address prefix is sent from an access server to the home gateway; and
the second address configuration unit is further configured to configure an IPv6 actual address of the terminal according to the address prefix, wherein the IPv6 actual address of the terminal is used for the terminal to access a network.

According to a fifth aspect of embodiments of the present disclosure, there is provided a computer storage medium, in which computer executable instructions are stored, wherein the computer executable instructions are configured to perform the method according to any one of the first and second aspects.

In the PPP-based dial-on-demand method and device and computer storage medium provided by embodiments of the present disclosure, a home gateway sends a virtual prefix to a terminal; the terminal configures an IPv6 virtual address of the terminal itself according to the received virtual prefix, and sends a data packet to the home gateway using the IPv6 virtual address; after the home gateway receives the data packet and confirms that the data packet allows to trigger PPP network connection dialing, the home gateway performs the PPP network connection dialing. In this way, the terminal can configure the IPv6 virtual address of the terminal itself according to the received virtual prefix and generate available IPv6 data packets, and the PPP-based dial-on-demand of the home gateway can be triggered after the home gateway confirms that the data packets allow to trigger the PPP network dialing and connection. Thus, the PPP-based dial-on-demand under the IPv6 protocol is realized.

### BRIEF DESCRIPTION OF THE DRAWINGS

Fig. 1 is a schematic diagram showing an architecture of a communication system according to an embodiment of the present disclosure;
Fig. 2 is a flow chart showing a PPP-based dial-on-demand method under the IPv6 protocol performed in the communication system provided by the embodiment of the present disclosure;
Fig. 3 is a flow chart showing a PPP-based dial-on-demand method under the IPv6 protocol according to an embodiment of the present disclosure;
Fig. 4 is a flow chart showing a PPP-based dial-on-demand method at a home gateway side under the IPv6 protocol according to an embodiment of the present disclosure;
Fig. 5 is a flow chart showing a PPP-based dial-on-demand method at a terminal side under the IPv6 protocol according to an embodiment of the present disclosure;
Fig. 6 is a schematic diagram showing the structure of a home gateway according to an embodiment of the present disclosure; and
Fig. 7 is a schematic diagram showing the structure of a terminal according to an embodiment of the present disclosure.

### DETAILED DESCRIPTION

The technical solutions in embodiments of the present disclosure will be described clearly and fully with reference to the drawings. It should be understood that the exemplary embodiments described below are only used for explaining and illustrating the present disclosure, rather than limiting the present disclosure.

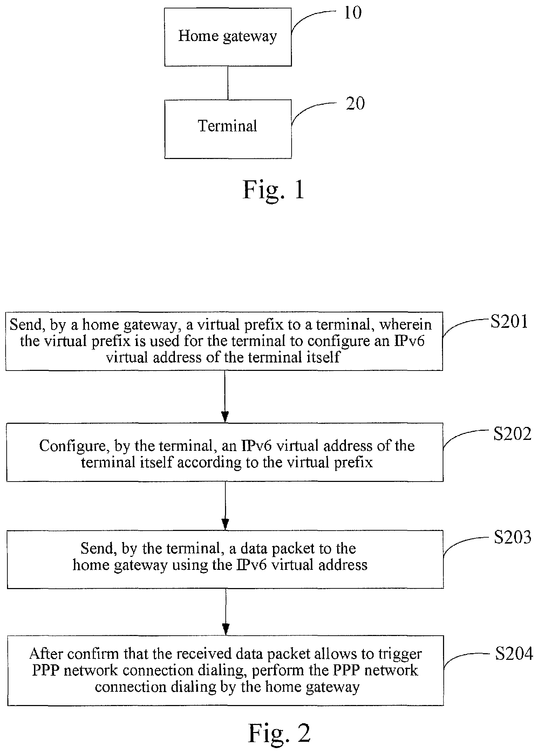

An embodiment provides a communication system. Fig. 1 is a schematic diagram showing an architecture of a communication system according to an embodiment of the present disclosure. As shown in Fig. 1, the system includes a home gateway 10 and a terminal 20. The home gateway 10 may be a Customer Premise Equipment (CPE). The terminal 20 may be a smart phone, a tablet, a laptop, a personal computer and the like. The terminal 20 may be an individual device, or may be a device connected with a local area network, and the present disclosure does not impose specific limitations on this.

In the embodiment, the home gateway 10 sends a virtual prefix to the terminal 20, and the virtual prefix is used for the terminal 20 to configure an IPv6 virtual address of the terminal 20 itself; after confirming that a received data packet allows to trigger PPP network connection dialing, the home gateway 10 performs the PPP network connection dialing, wherein the data packet is sent by the terminal using the IPv6 virtual address.

The terminal 20 receives a virtual prefix sent by the home gateway 10, configures an IPv6 virtual address of the terminal 20 itself according to the virtual prefix, and sends a data packet to the home gateway using the IPv6 virtual address, wherein the data packet is configured to trigger the home gateway 10 to perform PPP network connection dialing.

The procedure of the PPP-based dial-on-demand method performed by the communication system will be described below.

Fig. 2 is a flow chart showing a PPP-based dial-on-demand method under the IPv6 protocol performed in the communication system provided by the embodiment of the present disclosure. As shown in Fig. 2, the method includes the following steps.

In S201, the home gateway sends a virtual prefix to the terminal. The virtual prefix is used for the terminal to configure an IPv6 virtual address of the terminal itself.

Specifically, after correct physical link negotiation, the home gateway generates a virtual prefix and sends it to a terminal, so that the terminal may configure an IPv6 virtual address of the terminal itself according to the virtual prefix.

In practical applications, before the home gateway sends the virtual prefix to the terminal, the home gateway may configure an IPv6 virtual address of the home gateway itself, including information such as a virtual Link Local Address (LLA), a virtual Global Unicast Address (GUA), a virtual gateway address, a virtual Domain Name System (DNS) address and a virtual prefix. The information is used for local link communication of the home gateway.

In S202, the terminal configures an IPv6 virtual address of the terminal itself according to the virtual prefix.

Specifically, after receiving the virtual prefix sent from the home gateway, the terminal configures an IPv6 virtual address of the terminal itself, i.e., a virtual GUA address, using the virtual prefix.

In S203, the terminal sends a data packet to the home gateway using the IPv6 virtual address.

Specifically, after obtaining the IPv6 virtual address, if the terminal needs to access a network, for example, access a network site, or log into a server, the terminal sends a data packet to the home gateway using the IPv6 virtual address.

In S204, after confirming that a received data packet allows to trigger PPP network connection dialing, the home gateway performs the PPP network connection dialing.

Specifically, after receiving a data packet, the home gateway firstly determines the source of the data packet. For example, the home gateway may determine whether the data packet comes from a Local Area Network (LAN) side device according to a network interface identifier for receiving the data packet; if the data packet comes from a LAN side device, it is indicated that the data packet allows to trigger the PPP network connection dialing; if it is determined that the data packet is locally sent from the home gateway, or is sent from a Wide Area Network (WAN) side device, or other non-LAN side devices, it is indicated that the data packet does not allow to trigger the PPP network connection dialing.

If the home gateway determines that the received data packet allows to trigger the PPP network connection dialing, the home gateway further determines whether the data packet is an IPv6 packet. The PPP network connection dialing can be performed only if it is determined that the data packet is an IPv6 packet.

In practical applications, the above communication system may further include an access server, for example, a Broadband Remote Access Server (BRAS).

Accordingly, the step of performing the PPP network connection dialing by the home gateway in S204 may specifically include the following sub-steps.

In a first step, the home gateway sends an address acquisition request to the access server.

In a second step, the access server sends an address prefix to the home gateway in response to the address acquisition request. The address prefix is used for the terminal to configure an IPv6 actual address of the terminal itself.

In a third step, the home gateway sets the virtual prefix as an invalid prefix and sends the terminal an invalid virtual prefix notification which is configured to notify the terminal that the virtual prefix has been set as an invalid prefix.

Specifically, the home gateway sets the valid time of the virtual prefix as 0 (zero), and in this way, the virtual prefix becomes an invalid virtual prefix. At this time, the home gateway sends the terminal an invalid virtual prefix notification to notify the terminal that the virtual prefix has been set as an invalid prefix. Invalidating of the virtual address can facilitate subsequent configuration of the IPv6 actual address by the terminal.

In another embodiment, in response to the address acquisition request, the access server may further send address configuration information to the home gateway. The address configuration information may include: an LLA, a GUA, a gateway address, a DNS address and the like, and at this time, the home gateway can configure an IPv6 actual address of the home gateway itself based on the information, that is to say, the home gateway can configure an actual LLA, an actual GUA, an actual gateway address, an actual DNS address and the like of the home gateway. Alternatively, the home gateway can also configure the actual GUA of the home gateway itself based on the address prefix, and configure the actual LLA, the actual gateway address, the actual DNS address and the like based on the address configuration information. The IPv6 actual address configured by the home gateway is used for local link communication of the home gateway.

In a fourth step, the terminal confirms that the virtual prefix has been set as an invalid prefix according to the invalid virtual prefix notification.

In a fifth step, the home gateway sends the address prefix to the terminal.

In practical applications, the fourth and fifth steps can be performed simultaneously, or the fourth step can be performed first and then the fifth step; also, the address prefix can be carried in the invalid virtual prefix notification so that the address prefix and the invalid virtual prefix notification can be sent to the terminal at the same time, and the present disclosure does not impose specific limitations on this.

In a sixth step, the terminal configures the IPv6 actual address (i.e., the actual GUA) of the terminal itself according to the address prefix so as to access a network.

Optionally, after the fifth step, if no data packet is detected by the home gateway within a predetermined time period, the home gateway resends the virtual prefix or the address prefix.

For example, after the fifth step, the home gateway monitors whether there is a data packet arriving at the PPP network interface within a predetermined time period. At this time, the home gateway may start a timer; if the timer expires, that is to say, no data packet from the terminal is received by the home gateway within the predetermined time period, it is indicated that the terminal is in a traffic idle state, and the PPP network can be disconnected. In order to make the terminal access the network again when needed, the home gateway can resend the above virtual prefix or the address prefix to the terminal so that the terminal can reconfigure the IPv6 address and trigger the home gateway to perform the PPP network connection dialing when needed.

The methods according to one or more of the embodiments of the present disclosure will be described below with a specific example.

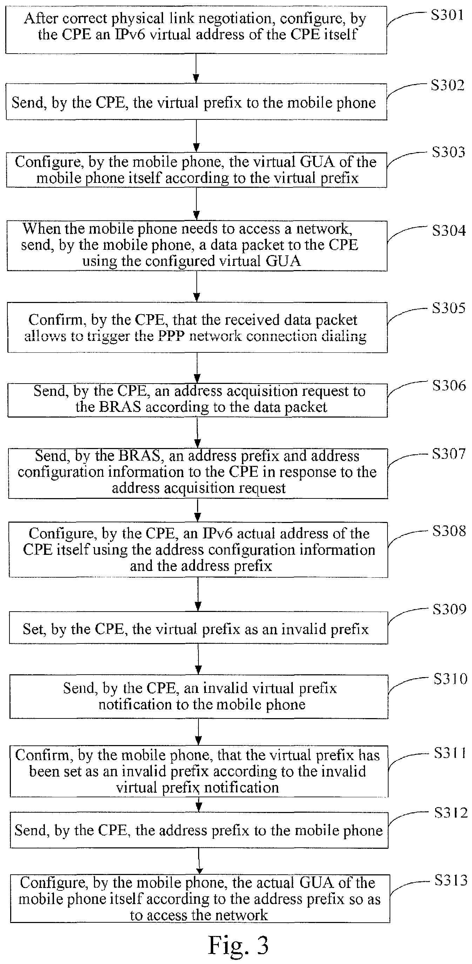

Assuming that the terminal is a mobile phone, the home gateway is a CPE, the access server is a BRAS, Fig. 3 shows a flow chart illustrating a PPP-based dial-on-demand method under the IPv6 protocol according to an embodiment of the present disclosure. Referring to Fig. 3, the method includes the following steps.

In S301, after correct physical link negotiation, the CPE configures an IPv6 virtual address of the CPE itself.

The IPv6 virtual address may include a virtual LLA, a virtual GUA, a virtual gateway address, a virtual DNS address and a virtual prefix.

In S302, the CPE sends the virtual prefix to the mobile phone.

In S303, the mobile phone configures the virtual GUA of the mobile phone itself according to the virtual prefix.

In S304, when the mobile phone needs to access a network, the mobile phone sends a data packet to the CPE using the configured virtual GUA.

In S305, the CPE confirms that the received data packet allows to trigger the PPP network connection dialing.

In S306, the CPE sends an address acquisition request to the BRAS according to the data packet.

In S307, the BRAS, in response to the address acquisition request, sends an address prefix and address configuration information to the CPE.

In S308, the CPE configures an IPv6 actual address of the CPE itself using the address configuration information and the address prefix.

In S309, the CPE sets the virtual prefix as an invalid prefix.

In S310, the CPE sends an invalid virtual prefix notification to the mobile phone.

In S311, the mobile phone confirms that the virtual prefix has been set as an invalid prefix according to the invalid virtual prefix notification.

In S312, the CPE sends the address prefix to the mobile phone.

In S313, the mobile phone configures the actual GUA of the mobile phone itself according to the address prefix, so as to access the network.

In the above embodiment, the home gateway sends the virtual prefix to the terminal; the terminal configures the IPv6 virtual address of the terminal itself according to the received virtual prefix and sends a data packet to the home gateway using the IPv6 virtual address; after confirming receipt of the data packet, the home gateway performs the PPP network connection dialing. In this way, the terminal can configure the IPv6 virtual address of the terminal itself according to the received virtual prefix, to generate an available IPv6 data packet and thereby to trigger the PPP-based dial-on-demand of the home gateway. Thus, the PPP-based dial-on-demand under the IPv6 protocol is realized.

Based on the same inventive concept, an embodiment of the present disclosure provides a PPP-based dial-on-demand method which is applied in a home gateway consistent with one or more of the above embodiments.

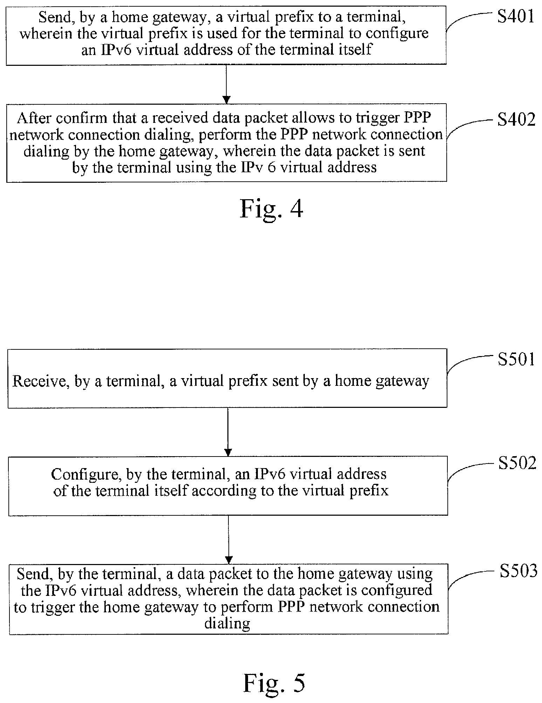

Fig. 4 is a flow chart showing a PPP-based dial-on-demand method at a home gateway side under the IPv6 protocol according to an embodiment of the present disclosure. As shown in Fig. 4, the method includes the following steps.

In S401, the home gateway sends a virtual prefix to a terminal. The virtual prefix is used for the terminal to configure an IPv6 virtual address of the terminal itself.

Optionally, before the step S401, the method may further include: configuring, by the home gateway, an IPv6 virtual address of the home gateway itself, wherein the IPv6 virtual address of the home gateway is used for local link communication of the home gateway.

In S402, after confirming that a received data packet allows to trigger PPP network connection dialing, the home gateway performs the PPP network connection dialing, wherein the data packet is sent by the terminal using the IPv6 virtual address.

In another embodiment, the step of performing the PPP network connection dialing by the home gateway in S402 includes the following substeps: sending, by the home gateway, an address acquisition request to an access server; receiving, by the home gateway, an address prefix sent by the access server in response to the address acquisition request; setting, by the home gateway, the virtual prefix as an invalid prefix, and sending the terminal an invalid virtual prefix notification which is configured to notify the terminal that the virtual prefix has been set as an invalid prefix; and sending, by the home gateway, the address prefix to the terminal, wherein the address prefix is used for the terminal to configure an IPv6 actual address of the terminal itself.

According to an exemplary embodiment, after sending of the address acquisition request to the access server by the home gateway, the method further includes: receiving, by the home gateway, address configuration information sent by the access server in response to the address acquisition request; and configuring, by the home gateway, an IPv6 actual address of the home gateway itself according to the address prefix and/or the address configuration information, wherein the IPv6 actual address of the home gateway is used for local link communication of the home gateway.

According to an exemplary embodiment, after sending of the address prefix to the terminal by the home gateway, the method further includes: if no data packet is detected within a preset time period, resending, by the home gateway, the virtual prefix or the address prefix to the terminal.

An embodiment of the present disclosure provides a PPP-based dial-on-demand method which is applied in a terminal consistent with one or more of the above embodiments.

Fig. 5 is a flow chart showing a PPP-based dial-on-demand method at a terminal side under the IPv6 protocol according to an embodiment of the present disclosure. As shown in Fig. 5, the method includes the following steps.

In S501, the terminal receives a virtual prefix sent by a home gateway.

In S502, the terminal configures an IPv6 virtual address of the terminal itself according to the virtual prefix.

In S503, the terminal sends a data packet to the home gateway using the IPv6 virtual address, wherein the data packet is configured to trigger the home gateway to perform PPP network connection dialing.

According to an exemplary embodiment, after S503, the method further includes: confirming, by the terminal, that the virtual prefix has been set as an invalid prefix according to an invalid virtual prefix notification which is received from the home gateway; receiving, by the terminal, an address prefix sent from the home gateway, wherein the address prefix is sent from an access server to the home gateway; and configuring, by the terminal, an IPv6 actual address of the terminal itself according to the address prefix, wherein the IPv6 actual address of the terminal is used for the terminal to access a network.

Based on the same inventive concept, an embodiment of the present disclosure provides a home gateway consistent with that in one or more of the above embodiments.

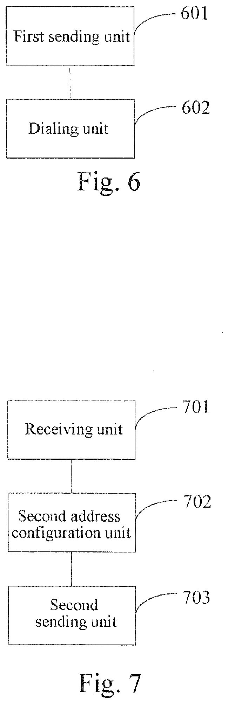

Fig. 6 is a schematic diagram showing the structure of a home gateway according to an embodiment of the present disclosure. As shown in Fig. 6, the home gateway includes a first sending unit 601 and a dialing unit 602. The first sending unit 601 is configured to send a virtual prefix to a terminal, wherein the virtual prefix is used for the terminal to configure an IPv6 virtual address of the terminal itself. The dialing unit 602 is configured to, after it is confirmed that a received data packet allows to trigger PPP network connection dialing, perform the PPP network connection dialing, wherein the data packet is sent by the terminal using the IPv6 virtual address.

According to an exemplary embodiment, the home gateway may further include a first address configuration unit configured to configure an IPv6 virtual address of the home gateway before the first sending unit 601 sends the virtual prefix to the terminal, wherein the IPv6 virtual address of the home gateway is used for local link communication of the home gateway.

According to an exemplary embodiment, the dialing unit 602 is configured to: send an address acquisition request to an access server; receive an address prefix sent by the access server in response to the address acquisition request; set the virtual prefix as an invalid prefix, and send the terminal an invalid virtual prefix notification which is configured to notify the terminal that the virtual prefix has been set as an invalid prefix; and send the address prefix to the terminal, wherein the address prefix is used for the terminal to configure an IPv6 actual address of the terminal itself.

According to an exemplary embodiment, the dialing unit 602 is configured to, after the address acquisition request is sent to the access server, receive address configuration information sent by the access server in response to the address acquisition request.

Accordingly, the home gateway further includes a first address configuration unit configured to configure an IPv6 actual address of the home gateway according to the address prefix and/or the address configuration information after the dialing unit 602 receives the address configuration information sent from the access server in response to the address acquisition request, wherein the IPv6 actual address of the home gateway is used for local link communication of the home gateway.

According to an exemplary embodiment, the first sending unit 601 is further configured to, after the dialing unit 602 performs the PPP network connection dialing, resend the virtual prefix or the address prefix to the terminal if no data packet is detected within a preset time period.

The first sending unit 601 may be disposed on a transmitter, or a radio frequency module and so on of the home gateway, the dialing unit 602 and the first address configuration unit may be disposed on a processor like CPU, ARM or the like, or disposed on a single chip microcomputer, an embedded controller, or a system-on-chip, and the present disclosure does not impose specific limitations on this.

An embodiment provides a terminal which is consistent with that in one or more of the above embodiments.

Fig. 7 is a schematic diagram showing the structure of a terminal according to an embodiment of the present disclosure. As shown in Fig. 7, the terminal includes a receiving unit 701, a second address configuration unit 702 and a second sending unit 703. The receiving unit 701 is configured to receive a virtual prefix sent by a home gateway; the second address configuration unit 702 is configured to configure an IPv6 virtual address of the terminal itself according to the virtual prefix; and the second sending unit 703 is configured to send a data packet to the home gateway using the IPv6 virtual address, wherein the data packet is configured to trigger the home gateway to perform PPP network connection dialing.

According to an exemplary embodiment, the receiving unit 701 is further configured to: after the second sending unit 703 sends the data packet to the home gateway using the IPv6 virtual address, confirm that the virtual prefix has been set as an invalid prefix according to an invalid virtual prefix notification which is received from the home gateway, and receive an address prefix sent from the home gateway, wherein the address prefix is sent from an access server to the home gateway. The second address configuration unit 702 is further configured to configure an IPv6 actual address of the terminal according to the address prefix, wherein the IPv6 actual address of the terminal is used for the terminal to access a network.

The receiving unit 701 and the second sending unit 702 can be disposed on a transmitter, or a radio frequency module and so on of the terminal, the second address configuration unit 702 may be disposed on a processor like CPU, ARM or the like, or disposed on a single chip microcomputer, an embedded controller, or a system-on-chip, and the present disclosure does not impose specific limitations on this.

An embodiment of the present disclosure provides a computer storage medium, in which computer executable instructions are stored, wherein the computer executable instructions are configured to perform at least one of the methods as described above, for example, one or more of the methods as described with reference to Figs. 2, 3, 4 and 5.

The computer storage medium may be any medium which can be used for storing program codes, such as a U disk, a mobile hard disk drive, a Read-Only Memory (ROM), a Random Access Memory (RAM), a magnetic disk or an optical disk. In some embodiments, the computer storage medium is a non-transient storage medium.

One of ordinary skill in this art should understand that embodiments of the present disclosure can be provided as methods, systems or computer program products. Thus, embodiments of the present disclosure can be implemented by hardware, software or combination thereof. Also, the present disclosure can be implemented in a form of computer program product which is implemented on one or more computer accessible storage mediums (including but not limited to a magnetic disk or an optical storage device and the like) containing computer executable program codes.

The present disclosure is described with reference to the flow charts and/or block diagrams of the methods, devices (systems) and computer program products according to embodiments of the present disclosure, and it should be understood that each flow and/or each block in the flow charts and/or block diagrams or a combination of the flows and/or the blocks in the flow charts and/or block diagrams can be implemented by computer program instructions. Such computer program instructions can be provided to a general computer, a dedicated computer, an embedded processor, or a processor of other programmable data processing devices to generate a machine, so that the computer or the processor of other programmable data processing devices execute the instructions to form devices for realizing designated functions of one or more flows in the flow charts and/or one or more blocks in the block diagram.

The computer program instructions may also be stored in computer readable storage devices which can guide the computer or other programmable data processing devices to work in a particular way. Thus, the instructions stored in the computer readable storage device generate an article of manufacture including an instruction device, which is configured to realize designated functions of one or more of the flows in the flow charts and/or one or more blocks in the block diagrams.

These computer program instructions can also be loaded onto a computer or other programmable data processing devices to make the computer or the other programmable devices execute a series of operation steps to generate computer-implemented processes. Thus, the instructions executed on the computer or the other programmable devices provide steps for realizing designated functions of one or more flows in the flow charts and/or one or more blocks in the block diagrams.

## Claims

1. A Point-to-Point Protocol (PPP)-based dial-on-demand method, comprising:
sending (S201, S401), by a home gateway, a virtual prefix to a terminal, wherein the virtual prefix is used for the terminal to configure an IPv6 virtual address of the terminal itself; and
after confirming that a received data packet allows to trigger PPP network connection dialing, performing (S204, S402) the PPP network connection dialing by the home gateway, wherein the data packet is sent by the terminal using the IPv6 virtual address.

2. The method according to claim 1, wherein before sending (S201, S401) of the virtual prefix to the terminal by the home gateway, the method further comprises:
configuring, by the home gateway, an IPv6 virtual address of the home gateway itself, wherein the IPv6 virtual address of the home gateway is used for local link communication of the home gateway.

3. The method according to claim1, wherein performing (S204, S402) the PPP network connection dialing by the home gateway comprises:
sending, by the home gateway, an address acquisition request to an access server;
receiving, by the home gateway, an address prefix sent by the access server in response to the address acquisition request;
setting, by the home gateway, the virtual prefix as an invalid prefix, and sending the terminal an invalid virtual prefix notification which is configured to notify the terminal that the virtual prefix has been set as an invalid prefix; and
sending, by the home gateway, the address prefix to the terminal, wherein the address prefix is used for the terminal to configure an IPv6 actual address of the terminal itself.

4. The method according to claim 3, after sending of the address acquisition request to the access server by the home gateway, the method further comprises:
receiving, by the home gateway, address configuration information sent by the access server in response to the address acquisition request; and
configuring, by the home gateway, an IPv6 actual address of the home gateway itself according to the address prefix and/or the address configuration information, wherein the IPv6 actual address of the home gateway is used for local link communication of the home gateway.

5. The method according to claim 3, wherein after sending of the address prefix to the terminal by the home gateway, the method further comprises:
if no data packet is detected within a preset time period, resending, by the home gateway, the virtual prefix or the address prefix to the terminal.

6. A Point-to-Point Protocol (PPP)-based dial-on-demand method, comprising:
receiving (S501), by a terminal, a virtual prefix sent by a home gateway;
configuring (S502, S202), by the terminal, an IPv6 virtual address of the terminal itself according to the virtual prefix; and
sending (S203, S503), by the terminal, a data packet to the home gateway using the IPv6 virtual address, wherein the data packet is configured to trigger the home gateway to perform PPP network connection dialing.

7. The method according to claim 6, wherein after sending of the data packet to the home gateway by the terminal using the IPv6 virtual address, the method further comprises:
confirming, by the terminal, that the virtual prefix has been set as an invalid prefix according to an invalid virtual prefix notification which is received from the home gateway;
receiving, by the terminal, an address prefix sent from the home gateway, wherein the address prefix is sent from an access server to the home gateway; and
configuring, by the terminal, an IPv6 actual address of the terminal itself according to the address prefix, wherein the IPv6 actual address of the terminal is used for the terminal to access a network.

8. A home gateway, comprising:
a first sending unit (601) configured to send a virtual prefix to a terminal, wherein the virtual prefix is used for the terminal to configure an IPv6 virtual address of the terminal itself; and
a dialing unit (602) configured to, after it is confirmed that a received data packet allows to trigger PPP network connection dialing, perform the PPP network connection dialing, wherein the data packet is sent by the terminal using the IPv6 virtual address.

9. The home gateway according to claim 8, further comprising:
a first address configuration unit configured to configure an IPv6 virtual address of the home gateway before the first sending unit sends the virtual prefix to the terminal, wherein the IPv6 virtual address of the home gateway is used for local link communication of the home gateway.

10. The home gateway according to claim 8, wherein the dialing unit (602) is configured to:
send an address acquisition request to an access server;
receive an address prefix sent by the access server in response to the address acquisition request;
set the virtual prefix as an invalid prefix, and send the terminal an invalid virtual prefix notification which is configured to notify the terminal that the virtual prefix has been set as an invalid prefix; and
send the address prefix to the terminal, wherein the address prefix is used for the terminal to configure an IPv6 actual address of the terminal itself.

11. The home gateway according to claim 10, wherein the dialing unit (602) is further configured to, after the address acquisition request is sent to the access server, receive address configuration information sent by the access server in response to the address acquisition request;
wherein the home gateway further comprises:
a first address configuration unit configured to configure an IPv6 actual address of the home gateway according to the address prefix and/or the address configuration information after the dialing unit receives the address configuration information sent from the access server in response to the address acquisition request, wherein the IPv6 actual address of the home gateway is used for local link communication of the home gateway.

12. The home gateway according to claim 10, wherein the first sending unit (601) is further configured to, after the dialing unit performs the PPP network connection dialing, resend the virtual prefix or the address prefix to the terminal if no data packet is detected within a preset time period.

13. A terminal, comprising:
a receiving unit (701) configured to receive a virtual prefix sent by a home gateway;
a second address configuration unit (702) configured to configure an IPv6 virtual address of the terminal itself according to the virtual prefix; and
a second sending unit (703) configured to send a data packet to the home gateway using the IPv6 virtual address, wherein the data packet is configured to trigger the home gateway to perform PPP network connection dialing.

14. The terminal according to claim 13, wherein the receiving unit (701) is further configured to:
after the second sending unit (703) sends the data packet to the home gateway using the IPv6 virtual address, confirm that the virtual prefix has been set as an invalid prefix according to an invalid virtual prefix notification which is received from the home gateway, and receive an address prefix sent from the home gateway, wherein the address prefix is sent from an access server to the home gateway; and
wherein the second address configuration unit (702) is further configured to configure an IPv6 actual address of the terminal according to the address prefix, wherein the IPv6 actual address of the terminal is used for the terminal to access a network.

15. A computer storage medium, in which computer executable instructions are stored, wherein the computer executable instructions are configured to perform the method according to any one of claims 1 to 7.

## Patentansprüche

1. Punk-zu-Punkt-Protokoll(PPP)-basiertes Einwahl-auf-Anfrage-Verfahren, Folgendes umfassend:
Senden (S201, S401) eines virtuellen Präfixes durch ein Home-Gateway an ein Terminal, wobei das virtuelle Präfix für das Terminal verwendet wird, um eine virtuelle IPv6-Adresse des Terminals selbst zu konfigurieren; und
nach dem Bestätigen, dass ein empfangenes Datenpaket das Auslösen einer PPP-Netzwerkverbindungswahl ermöglicht, Durchführen (S204, S402) der PPP-Netzwerkverbindungswahl durch das Home-Gateway, wobei das Datenpaket von dem Terminal unter Verwendung der virtuellen IPv6-Adresse gesendet wird.

2. Verfahren nach Anspruch 1, wobei das Verfahren vor dem Senden (S201, S401) des virtuellen Präfixes an das Terminal durch das Home-Gateway ferner Folgendes umfasst:
Konfigurieren einer virtuellen IPv6-Adresse des Home-Gateways selbst durch das Home-Gateway, wobei die virtuelle IPv6-Adresse des Home-Gateways für die lokale Verknüpfungskommunikation des Home-Gateways verwendet wird.

3. Verfahren nach Anspruch 1, wobei das Durchführen (S204, S402) der PPP-Netzwerkverbindungswahl durch das Home-Gateway Folgendes umfasst:
Senden einer Adresserfassungsanforderung durch ein Home-Gateway an einen Zugriffsserver;
Empfangen durch das Home-Gateway eines Adresspräfixes, das von dem Zugriffsserver als Antwort auf die Adresserfassungsanforderung gesendet wird;
Einstellen des virtuellen Präfixes durch das Home-Gateway als ein ungültiges Präfix und Senden einer Benachrichtigung über ein ungültiges virtuelles Präfix an das Terminal, das konfiguriert ist, um dem Terminal mitzuteilen, dass das virtuelle Präfix als ein ungültiges Präfix eingestellt wurde; und
Senden des Adresspräfixes an das Terminal durch das Home-Gateway, wobei das Adresspräfix für das Terminal verwendet wird, um eine tatsächliche IPv6-Adresse des Terminals selbst zu konfigurieren.

4. Verfahren nach Anspruch 3, wobei das Verfahren nach dem Senden der Adresserfassungsanforderung an den Zugriffsserver durch das Home-Gateway ferner Folgendes umfasst:
Empfangen durch das Home-Gateway von Adresskonfigurationsinformationen, die von dem Zugriffsserver als Reaktion auf die Adresserfassungsanforderung gesendet werden; und
Konfigurieren durch das Home-Gateway einer tatsächlichen IPv6-Adresse des Home-Gateways selbst gemäß dem Adresspräfix und/oder der Adresskonfigurationsinformationen, wobei die tatsächliche IPv6-Adresse des Home-Gateways für die lokale Verknüpfungskommunikation des Home-Gateways verwendet wird.

5. Verfahren nach Anspruch 3, wobei das Verfahren nach dem Senden des Adresspräfixes durch das Home-Gateway an das Terminal ferner Folgendes umfasst:
wenn innerhalb eines voreingestellten Zeitraums kein Datenpaket erkannt wird, erneutes Senden durch das Home-Gateway des virtuellen Präfixes oder des Adresspräfixes an das Terminal.

6. Punkt-zu-Punkt-Protokoll(PPP)-basiertes Einwahl-auf-Anfrage-Verfahren, Folgendes umfassend:
Empfangen (S501) durch ein Terminal eines von einem Home-Gateway gesendeten virtuellen Präfixes;
Konfigurieren (S502, S202) durch das Terminal einer virtuellen IPv6-Adresse des Terminals selbst gemäß dem virtuellen Präfix; und
Senden (S203, S503) durch das Terminal eines Datenpakets an das Home-Gateway unter Verwendung der virtuellen IPv6-Adresse, wobei das Datenpaket konfiguriert ist, um auszulösen, dass das Home-Gateway eine PPP-Netzwerkverbindungswahl durchzuführt.

7. Verfahren nach Anspruch 6, wobei das Verfahren nach dem Senden des Datenpakets an das Home-Gateway durch das Terminal unter Verwendung der virtuellen IPv6-Adresse ferner Folgendes umfasst:
Bestätigen durch das Terminal, dass das virtuelle Präfix als ein ungültiges Präfix gemäß einer Benachrichtigung für ein ungültiges virtuelles Präfix eingestellt wurde, die von dem Home-Gateway empfangen wird;
Empfangen eines von dem Home-Gateway gesendeten Adresspräfix durch das Terminal, wobei das Adresspräfix von einem Zugriffsserver an das Home-Gateway gesendet wird; und
Konfigurieren durch das Terminal einer tatsächlichen IPv6-Adresse des Terminals selbst gemäß dem Adresspräfix, wobei die tatsächliche IPv6-Adresse des Terminals für das Terminal verwendet wird, um auf ein Netzwerk zuzugreifen.

8. Home-Gateway, Folgendes umfassend:
eine erste Sendeeinheit (601), die zum Senden eines virtuellen Präfixes an ein Terminal konfiguriert ist, wobei das virtuelle Präfix für das Terminal verwendet wird, um eine virtuelle IPv6-Adresse des Terminals selbst zu konfigurieren; und
eine Wähleinheit (602), die konfiguriert ist, um, nachdem es bestätigt wurde, dass ein empfangenes Datenpaket ermöglicht, dass eine PPP-Netzwerkverbindungswahl ausgelöst wird, die PPP-Netzwerkverbindungswahl durchzuführen, wobei das Datenpaket von dem Terminal unter Verwendung der virtuellen IPv6-Adresse gesendet wird.

9. Home-Gateway nach Anspruch 8, ferner Folgendes umfassend:
eine erste Adresskonfigurationseinheit, die konfiguriert ist, um eine virtuelle IPv6-Adresse des Home-Gateways zu konfigurieren, bevor die erste Sendeeinheit das virtuelle Präfix an das Terminal sendet, wobei die virtuelle IPv6-Adresse des Home-Gateways für die lokale Verknüpfungskommunikation des Home-Gateways verwendet wird.

10. Home-Gateway nach Anspruch 8, wobei die Wähleinheit (602) zu Folgendem konfiguriert ist:
Senden einer Adresserfassungsanforderung an einen Zugriffsserver;
Empfangen eines Adresspräfixes, das von dem Zugriffsserver als Antwort auf die Adresserfassungsanforderung gesendet wird;
Einstellen des virtuellen Präfixes als ein ungültiges Präfix und Senden einer Benachrichtigung über ein ungültiges virtuelles Präfix an das Terminal, das konfiguriert ist, um dem Terminal mitzuteilen, dass das virtuelle Präfix als ein ungültiges Präfix eingestellt wurde; und
Senden des Adresspräfixes an das Terminal, wobei das Adresspräfix für das Terminal verwendet wird, um eine tatsächliche IPv6-Adresse des Terminals selbst zu konfigurieren.

11. Home-Gateway nach Anspruch 10, wobei die Wähleinheit (602) ferner konfiguriert ist, um, nachdem die Adresserfassungsanforderung an den Zugriffsserver gesendet wurde, Adresskonfigurationsinformationen zu empfangen, die von dem Zugriffsserver als Antwort auf die Adresserfassungsanforderung gesendet werden;
wobei das Home-Gateway ferner Folgendes umfasst:
eine erste Adresskonfigurationseinheit, die konfiguriert ist, um eine tatsächliche IPv6-Adresse des Home-Gateways gemäß dem Adresspräfix und/oder der Adresskonfigurationsinformationen zu konfigurieren, nachdem die Wähleinheit die Adresskonfigurationsinformationen empfangen hat, die von dem Zugriffsserver als Antwort auf die Adresserfassungsanforderung gesendet werden, wobei die tatsächliche IPv6-Adresse des Home-Gateways für die lokale Verknüpfungskommunikation des Home-Gateways verwendet wird.

12. Home-Gateway nach Anspruch 10, wobei die erste Sendeeinheit (601) ferner konfiguriert ist, um, nachdem die Wähleinheit die PPP-Netzwerkverbindungswahl durchgeführt hat, das virtuelle Präfix oder das Adresspräfix erneut an das Terminal zu senden, wenn kein Datenpaket innerhalb eines voreingestellten Zeitraums erfasst wird.

13. Terminal, Folgendes umfassend:
eine Empfangseinheit (701), die konfiguriert ist, um ein von einem Home-Gateway gesendetes virtuelles Präfix zu empfangen;
eine zweite Adresskonfigurationseinheit (702), die konfiguriert ist, um eine virtuelle IPv6-Adresse des Terminals selbst gemäß dem virtuellen Präfix zu konfigurieren; und
eine zweite Sendeeinheit (703), die konfiguriert ist, um ein Datenpaket an das Home-Gateway unter Verwendung der virtuellen IPv6-Adresse zu senden, wobei das Datenpaket konfiguriert ist, um auszulösen, dass das Home-Gateway eine PPP-Netzwerkverbindungswahl durchführt.

14. Terminal nach Anspruch 13, wobei die Empfangseinheit (701) ferner zu Folgendem konfiguriert ist:
nachdem die zweite Sendeeinheit (703) das Datenpaket unter Verwendung der virtuellen IPv6-Adresse an das Home-Gateway gesendet hat, Bestätigen, dass das virtuelle Präfix gemäß einer Benachrichtigung über ein ungültiges Präfix, die vom Home-Gateway empfangen wird, als ungültiges Präfix eingestellt wurde, und Empfangen eines von dem Home-Gateway gesendeten Adresspräfixes, wobei das Adresspräfix von einem Zugriffsserver an das Home-Gateway gesendet wird; und
wobei die zweite Adresskonfigurationseinheit (702) ferner konfiguriert ist, um eine tatsächliche IPv6-Adresse des Terminals gemäß dem Adresspräfix zu konfigurieren, wobei die tatsächliche IPv6-Adresse des Terminals für das Terminal verwendet wird, um auf ein Netzwerk zuzugreifen.

15. Computerspeichermedium, in dem computerausführbare Anweisungen gespeichert sind, wobei die computerausführbaren Anweisungen konfiguriert sind, um das Verfahren nach einem der Ansprüche 1 bis 7 durchzuführen.

## Revendications

1. Procédé de numérotation à la demande basée sur le protocole PPP (protocole point à point) comprenant :
l'envoi (S201, S401), par le biais d'une passerelle domestique, d'un préfixe virtuel à un terminal, dans lequel le préfixe virtuel est utilisé pour que le terminal configure une adresse virtuelle IPv6 du terminal lui-même ; et
après confirmation qu'un paquet de données reçu permet de déclencher la numérotation par connexion de réseau PPP, l'exécution (S204, S402) de la numérotation par connexion de réseau PPP par le biais de la passerelle domestique, dans lequel le paquet de données est envoyé par le biais du terminal en utilisant l'adresse virtuelle IPv6.

2. Procédé selon la revendication 1, dans lequel avant l'envoi (S201, S401) du préfixe virtuel au terminal par le biais de la passerelle domestique, le procédé comprend en outre :
la configuration, par le biais de la passerelle domestique, d'une adresse virtuelle IPv6 de la passerelle domestique elle-même, dans lequel l'adresse virtuelle IPv6 de la passerelle domestique est utilisée aux fins de communication de liaison locale de la passerelle domestique.

3. Procédé selon la revendication 1, dans lequel l'exécution (S204, S402) de la numérotation par connexion de réseau PPP par le biais de la passerelle domestique comprend :
l'envoi, par le biais de la passerelle domestique, d'une demande d'acquisition d'adresse à un serveur d'accès ;
la réception, par le biais de la passerelle domestique, d'un préfixe d'adresse envoyé par le serveur d'accès en réponse à la demande d'acquisition d'adresse ;
la définition, par le biais de la passerelle domestique, du préfixe virtuel en tant que préfixe non valide, et l'envoi au terminal d'une notification de préfixe virtuel non valide configurée pour notifier au terminal que le préfixe virtuel a été défini en tant que préfixe invalide ; et
l'envoi, par le biais de la passerelle domestique, du préfixe d'adresse au terminal, dans lequel le préfixe d'adresse est utilisé par le terminal pour configurer une adresse réelle IPv6 du terminal lui-même.

4. Procédé selon la revendication 3, après l'envoi de la demande d'acquisition d'adresse au serveur d'accès par le biais de la passerelle domestique, le procédé comprend en outre :
la réception, par le biais de la passerelle domestique, d'informations d'adresse envoyées par le serveur d'accès en réponse à la demande d'acquisition d'adresse ; et
la configuration, par le biais de la passerelle domestique, d'une adresse réelle IPv6 de la passerelle domestique elle-même en fonction du préfixe d'adresse et/ou des informations de configuration d'adresse, dans lequel l'adresse réelle IPv6 de la passerelle domestique est utilisée aux fins de communication de liaison locale de la passerelle domestique.

5. Procédé selon la revendication 3, dans lequel, après l'envoi du préfixe d'adresse au terminal par le biais de la passerelle domestique, le procédé comprend en outre ce qui suit :
si aucun paquet de données n'est détecté dans un délai prédéfini, le préfixe virtuel ou le préfixe d'adresse est renvoyé au terminal par le biais de la passerelle domestique.

6. Procédé de numérotation à la demande basée sur le protocole PPP (Point-to-Point Protocol) comprenant :
la réception (S501), par un terminal, d'un préfixe virtuel envoyé par le biais d'une passerelle domestique ;
la configuration (S502, S202), par le terminal, d'une adresse virtuelle IPv6 du terminal lui-même en fonction du préfixe virtuel ; et
l'envoi (S203, S503), par le terminal, d'un paquet de données à la passerelle domestique à l'aide de l'adresse virtuelle IPv6, dans lequel le paquet de données est configuré pour déclencher la numérotation par connexion de réseau PPP.

7. Procédé selon la revendication 6, dans lequel, après l'envoi du paquet de données à la passerelle domestique par le terminal à l'aide de l'adresse virtuelle IPv6, le procédé comprend en outre :
la confirmation, par le terminal, que le préfixe virtuel a été défini comme préfixe invalide conformément à une notification de préfixe virtuel invalide reçue de la passerelle domestique ;
la réception, par le terminal, d'un préfixe d'adresse envoyé par le biais de la passerelle domestique, dans lequel le préfixe d'adresse est envoyé par un serveur d'accès à la passerelle domestique ; et
la configuration, par le terminal, d'une adresse IPv6 réelle du terminal lui-même en fonction du préfixe d'adresse, dans lequel l'adresse IPv6 réelle du terminal est utilisée pour que le terminal accède à un réseau.

8. Passerelle domestique, comprenant :
une première unité d'envoi (601) configurée pour envoyer un préfixe virtuel à un terminal, dans laquelle le préfixe virtuel est utilisé pour que le terminal configure une adresse virtuelle IPv6 du terminal lui-même ; et
une unité de numérotation (602) configurée pour effectuer la numérotation par connexion de réseau PPP après confirmation du fait qu'un paquet de données reçu permet de déclencher la numérotation de connexion de réseau PPP, dans laquelle le paquet de données est envoyé par le terminal à l'aide de l'adresse virtuelle IPv6.

9. Passerelle domestique selon la revendication 8, comprenant en outre :
une première unité de configuration d'adresse prévue pour configurer une adresse virtuelle IPv6 de la passerelle domestique avant que la première unité d'envoi n'envoie le préfixe virtuel au terminal, dans laquelle l'adresse virtuelle IPv6 de la passerelle domestique est utilisée aux fins de communication de liaison locale de la passerelle domestique.

10. Passerelle domestique selon la revendication 8, dans laquelle l'unité de numérotation (602) est configurée pour :
envoyer une demande d'acquisition d'adresse à un serveur d'accès ;
recevoir un préfixe d'adresse envoyé par le serveur d'accès en réponse à la demande d'acquisition d'adresse ;
définir le préfixe virtuel en tant que préfixe non valide et l'envoi au terminal d'une notification de préfixe virtuel non valide configurée pour notifier au terminal que le préfixe virtuel a été défini en tant que préfixe invalide ; et
envoyer le préfixe d'adresse au terminal, dans laquelle le préfixe d'adresse est utilisé par le terminal pour configurer une adresse réelle IPv6 du terminal lui-même.

11. Passerelle domestique selon la revendication 10, dans laquelle l'unité de numérotation (602) est en outre configurée pour recevoir des informations de configuration d'adresse envoyées par le serveur d'accès en réponse à la demande d'acquisition d'adresse après l'envoi de la demande d'acquisition d'adresse au serveur d'accès ;
dans laquelle la passerelle domestique comprend en outre :
une première unité de configuration d'adresse prévue pour configurer une adresse IPv6 réelle de la passerelle domestique en fonction du préfixe d'adresse et/ou des informations de configuration d'adresse après que l'unité de numérotation a reçu les informations de configuration d'adresse envoyées par le serveur d'accès en réponse à la demande d'acquisition d'adresse, dans laquelle l'adresse IPv6 réelle de la passerelle domestique est utilisée aux fins de communication de liaison locale de la passerelle domestique.

12. Passerelle domestique selon la revendication 10, dans laquelle la première unité d'envoi (601) est en outre configurée pour renvoyer le préfixe virtuel ou le préfixe d'adresse au terminal si aucun paquet de données n'est détecté dans un délai prédéfini après que l'unité de numérotation a effectué la numérotation par connexion de réseau PPP.

13. Terminal, comprenant :
une unité de réception (701) configurée pour recevoir un préfixe virtuel envoyé par le biais d'une passerelle domestique ;
une deuxième unité de configuration d'adresse (702) prévue pour configurer une adresse virtuelle IPv6 du terminal lui-même en fonction du préfixe virtuel ; et
une seconde unité d'envoi (703) configurée pour envoyer un paquet de données à la passerelle domestique en utilisant l'adresse virtuelle IPv6, dans lequel le paquet de données est configuré pour déclencher la numérotation par connexion de réseau PPP.

14. Terminal selon la revendication 13, dans lequel l'unité de réception (701) est en outre configurée pour :
confirmer que le préfixe virtuel a été défini comme préfixe non valide conformément à une notification de préfixe virtuel non valide reçue de la passerelle domestique et recevoir un préfixe d'adresse envoyé depuis la passerelle domestique après que la deuxième unité d'envoi (703) a envoyé le paquet de données à la passerelle domestique à l'aide de l'adresse virtuelle IPv6, le préfixe d'adresse étant envoyé par un serveur d'accès à la passerelle domestique ; et
dans lequel la seconde unité de configuration d'adresse (702) est en outre prévue pour configurer une adresse réelle IPv6 du terminal en fonction du préfixe d'adresse, l'adresse réelle IPv6 du terminal étant utilisée pour que le terminal accède à un réseau.

15. Support de stockage d'ordinateur, dans lequel des instructions exécutables par ordinateur sont enregistrées, les instructions exécutables par ordinateur étant configurées pour exécuter le procédé selon l'une des revendications 1 à 7.
